# EUROPÄISCHE PATENTSCHRIFT

(11) **EP 0 534 296 B1**
(45) Veröffentlichungstag und Bekanntmachung des Hinweises auf die Patenterteilung: **04.12.1996**
(21) Anmeldenummer: 92115801.0
(22) Anmeldetag: 16.09.1992
(51) Int. Cl.: C09B 29/44, C09B 29/033, C09B 29/039

(54) **Azofarbstoffe mit einer Kupplungskomponente aus der Chinolinreihe**
Azo dyes with a quinoline-type coupling component
Colorants azoiques avec un copulant de type quinoline

(30) Priorität: 26.09.1991 DE 4132074
(43) Veröffentlichungstag der Anmeldung: 31.03.1993
(73) Patentinhaber: BASF Aktiengesellschaft, 67063 Ludwigshafen (DE)
(72) Erfinder: Hahn, Erwin, Dr., W-6900 Heidelberg (DE); Grund, Clemens, Dr., W-6800 Mannheim 24 (DE); Geisberger, Andreas, Dr., W-6703 Limburgerhof (DE); Reichelt, Helmut, Dr., W-6730 Neustadt (DE); Guldner, Andreas, Dr., W-6940 Weinheim (DE); Wiesenfeldt, Matthias, Dr., W-6704 Mutterstadt (DE); Etzbach, Karl-Heinz, Dr., W-6710 Frankenthal (DE); Sens, Ruediger, Dr., W-6800 Mannheim 1 (DE); Hagen, Helmut, Dr., W-6710 Frankenthal (DE)

(56) Entgegenhaltungen:
- EP-A- 0 251 114
- JP-A- 3 256 793
- CHEMICAL ABSTRACTS, vol. 102, no. 16, 22. April 1985, Columbus, Ohio, US; abstract no. 133543a, 'monoazo disperse dyes for polyester fibers' Seite 78 ;
- CHEMICAL ABSTRACTS, vol. 89, no. 22, 27. November 1978, Columbus, Ohio, US; abstract no. 181172p, S.IMAHORI ET AL. 'dyeing of synthetic fibers' Seite 58 ;
- CHEMICAL ABSTRACTS, vol. 89, no. 14, 2. Oktober 1978, Columbus, Ohio, US; abstract no. 112334f, S.IMAHORI ET AL. 'dyeing of synthetic fibers' Seite 156 ;
- O.ANNEN et al. Rev.Prog.Coloration vol.17, 72 (1987)

## Beschreibung

Die vorliegende Erfindung betrifft neue Azofarbstoffe der Formel I 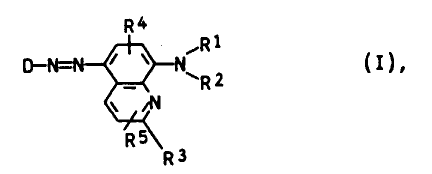 in der
- R¹ und R²: gleich oder verschieden sind und unabhängig voneinander jeweils C₁-C₁₀-Alkyl, das gegebenenfalls durch 1 oder 2 Sauerstoffatome in Etherfunktion unterbrochen ist und durch Phenyl, Cyano, C₁-C₄-Alkoxycarbonyl, C₁-C₄-Alkoxycarbonyloxy, Hydroxy oder C₁-C₄-Alkanoyloxy substituiert sein kann, oder gegebenenfalls durch Chlor substituiertes C₃-C₄-Alkenyl oder R¹ zusätzlich Wasserstoff,
- R³: Wasserstoff oder C₁-C₆-Alkyl,
- R⁴ und R⁵: gleich oder verschieden sind und unabhängig voneinander jeweils Wasserstoff, C₁-C₆-Alkyl, Halogen, C₁-C₆-Alkoxy, Amino oder C₁-C₄-Mono- oder Dialkylamino und
- D: einen Rest der Formel 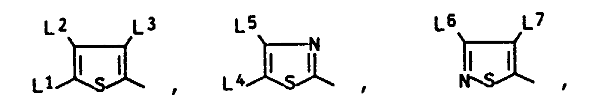 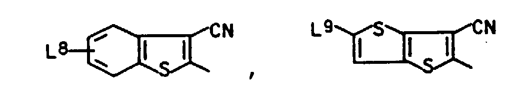 oder 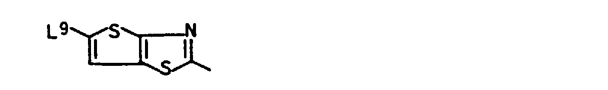 bedeuten, worin
- L¹: für Cyano, C₁-C₆-Alkanoyl, Benzoyl, C₁-C₄-Alkoxycarbonyl, C₁-C₆-Alkylsulfonyl, gegebenenfalls substituiertes Phenylsulfonyl oder einen Rest der Formel -CH=C(CN)₂ oder -CH=C(CN)-COOX, worin X die Bedeutung von C₁-C₄-Alkyl besitzt,
- L²: für Halogen, gegebenenfalls durch Phenyl oder C₁-C₄-Alkoxy substituiertes C₁-C₆-Alkoxy, gegebenenfalls substituiertes Phenoxy, gegebenenfalls durch Phenyl substituiertes C₁-C₆-Alkylthio, gegebenenfalls substituiertes Phenylthio, C₁-C₆-Alkylsulfonyl, gegebenenfalls substituertes Phenylsulfonyl oder C₁-C₄-Alxoxycarbonyl,
- L³: für Cyano oder C₁-C₄-Alkoxycarbonyl,
- L⁴: für Cyano, C₁-C₆-Alkanoyl, Benzoyl, C₁-C₆-Alkylsulfonyl, gegebenenfalls substituiertes Phenylsulfonyl oder einen Rest der Formel -CH=C(CN)₂ oder -CH=C(CN)-COOX, worin X die Bedeutung von C₁-C₄-Alkyl besitzt,
- L⁵: für Wasserstoff, C₁-C₆-Alkyl, Halogen, gegebenenfalls durch Phenyl oder C₁-C₄-Alkoxy, substituiertes C₁-C₆-Alkoxy, gegebenenfalls durch Phenyl substituiertes C₁-C₆-Alkylthio, gegebenenfalls substituiertes Phenylthio, C₁-C₆-Alkylsulfonyl, gegebenenfalls substituiertes Phenylsulfonyl oder C₁-C₄-Alkoxycarbonyl,
- L⁶: für Cyano, gegebenenfalls durch Phenyl substituiertes C₁-C₆-Alkyl, C₁-C₆-Alkylthio, gegebenenfalls substituiertes Phenyl, Thienyl, C₁-C₄-Alkylthienyl, Pyridyl oder C₁-C₄-Alkylpyridyl,
- L⁷: für Cyano, C₁-C₄-Alkoxycarbonyl, Halogen oder Thiocyanato,
- L⁸: für Wasserstoff, Cyano oder Halogen und
- L⁹: für C₁-C₆-Alkanoyl oder C₁-C₄-Alkoxycarbonyl
stehen,
sowie deren Verwendung zum Färben oder Bedrucken von textilen Fasern oder Geweben oder zur thermischen übertragung.

Aus der JP-A-65 481/1978 sind Azofarbstoffe bekannt, deren Diazokomponenten sich von 2-Aminothiophenen und deren Kupplungskomponenten sich von 8-Aminochinolinen ableiten. Es hat sich jedoch gezeigt, daß die dort genannten Farbstoffe noch Mängel in ihren anwendungstechnischen Eigenschaften aufweisen.

Auch in der JP-A-204 658/1984, JP-A-24 487/1978 sowie in Rev. Prog. Color., Band 17, Seiten 72 bis 85, 1987, sind Azofarbstoffe mit einer Kupplungskomponente aus der 8-Aminochinolinreihe beschrieben.

Aufgabe der vorliegenden Erfindung war es nun, neue Azofarbstoffe bereitzustellen, die ebenfalls eine Kupplungskomponente aus der 8-Aminochinolinreihe aufweisen und deren Diazokomponente aus der heterocyclischen Reihe stammt. Die neuen Farbstoffe sollten sich durch ein vorteilhaftes anwendungstechnisches Eigenschaftsprofil auszeichnen.

Demgemäß wurden die eingangs näher bezeichneten Azofarbstoffe der Formel I gefunden.

Wenn in den Resten der obengenannten Formel I substituiertes Phenyl auftritt, so können beispielsweise C₁-C₄-Alkyl, C₁-C₄-Alkoxy oder Halogen, dabei insbesondere Chlor oder Brom, als Substituenten in Betracht kommen. Die Phenylringe weisen dabei in der Regel 1 bis 3 Substituenten auf.

Alle in den obengenannten Formeln auftretenden Alkyl- oder Alkenylgruppen können sowohl geradkettig als auch verzweigt sein.

Reste R¹, R², R³, R⁴, R⁵, L⁵ und L⁶ sind z.B. Methyl, Ethyl, Propyl, Isopropyl, Butyl, Isobutyl, sec-Butyl, Pentyl, Isopentyl, Neopentyl, tert-Pentyl, Hexyl oder 2-Methylpentyl.

Reste R¹, R² und L⁶ sind weiterhin Benzyl oder 1- oder 2-Phenylethyl.

Reste L², L⁵ und L⁶ sind weiterhin z.B. Methylthio, Ethylthio, Propylthio, Isopropylthio, Butylthio, Isobutylthio, Pentylthio, Hexylthio, Benzylthio, 1- oder 2-Phenylethylthio, Phenylthio, 2-Methylphenylthio, 2-Methoxyphenylthio oder 2-Chlorphenylthio.

Reste L² und L⁵ sind, wie auch Reste R⁴ und R⁵, weiterhin z.B. Methoxy, Ethoxy, Propoxy, Isopropoxy, Butoxy, Isobutoxy, sec-Butoxy, Pentyloxy, Isopentyloxy, Neopentyloxy, tert-Pentyloxy, Hexyloxy oder 2-Methylpentyloxy.

Reste R⁴, R⁵, L² und L⁵ sind, wie auch Reste L⁷ und L⁸, weiterhin z.B. Fluor, Chlor oder Brom.

Reste L¹, L² und L⁵ sind, wie auch Reste L⁴, weiterhin z.B. Methylsulfonyl, Ethylsulfonyl, Propylsulfonyl, Isopropylsulfonyl, Butylsulfonyl, Isobutylsulfonyl, sec-Butylsulfonyl, Pentylsulfonyl, Isopentylsulfonyl, Isopentylsulfonyl, Hexylsulfonyl, Phenylsulfonyl, 2-Methylphenylsulfonyl, 2-Methoxyphenylsulfonyl oder 2-Chlorphenylsulfonyl.

Reste L¹, L², L⁵ und L⁷ sind, wie auch Reste L³ und L⁹, weiterhin z.B. Methoxycarbonyl, Ethoxycarbonyl, Propoxycarbonyl, Isoprop-oxycarbonyl, Butoxycarbonyl, Isobutoxycarbonyl oder sec-Butoxy-carbonyl.

Reste L² und L⁵ sind weiterhin z.B. 2-Methoxyethoxy, 2-Ethoxyethoxy, 2- oder 3-Methoxypropoxy, 2- oder 3-Ethoxypropoxy, 2- oder 4-Methoxybutoxy, 2- oder 4-Ethoxybutoxy, 5-Methoxypentyloxy, 5-Ethoxypentyloxy, 6-Methoxyhexyloxy, 6-Ethoxyhexyloxy, Benzyloxy oder 1- oder 2-Phenylethoxy.

Reste R⁴ und R⁵ sind weiterhin z.B. Mono- oder Dimethylamino, Mono- oder Diethylamino, Mono- oder Dipropylamino, Mono- oder Diisopropylamino, Mono- oder Dibutylamino oder N-Methyl-N-ethylamino.

Reste L⁶ sind weiterhin z.B. Phenyl, 2-, 3- oder 4-Methylphenyl, 2,4-Dimethylphenyl, 2-, 3- oder 4-Chlorphenyl, 2-, 3- oder 4-Methoxyphenyl, 2- oder 3-Methylthienyl oder 2-, 3- oder 4-Methylpyridyl.

Reste L¹, L⁴ und L⁹ sind weiterhin z.B. Formyl, Acetyl, Propionyl, Butyryl, Isobutyryl, Pentanoyl oder Hexanoyl.

Reste R¹ und R² sind weiterhin z.B. Heptyl, Octyl, 2-Ethylhexyl, Isooctyl, Nonyl, Isononyl, Decyl, Cyanomethyl, 2-Cyanoethyl, 3-Cyanopropyl, 2-Cyanobutyl, 4-Cyanobutyl, 5-Cyanopentyl, 6-Cyanohexyl, 2-Hydroxyethyl, 2-Hydroxypropyl, 3-Hydroxypropyl, 2-Hydroxybutyl, 4-Hydroxybutyl, 5-Hydroxypentyl, 6-Hydroxyhexyl, 2-Methoxyethyl, 2-Ethoxyethyl, 2-Propoxyethyl, 2-Isopropoxyethyl, 2-Butoxyethyl, 2- oder 3-Methoxypropyl, 2- oder 3-Ethoxypropyl, 2- oder 3-Propoxypropyl, 2- oder 3-Butoxypropyl, 2- oder 4-Methoxybutyl, 2- oder 4-Ethoxybutyl, 2- oder 4-Propoxybutyl, 2- oder 4-Butoxybutyl, 3,6-Dioxaheptyl, 3,6-Dioxaoctyl, 4,8-Dioxanonyl, 3,7-Dioxaoctyl, 3,7-Dioxanonyl, 4,7-Dioxaoctyl, 4,7-Dioxanonyl, 4,8-Dioxadecyl, Methoxycarbonylmethyl, Ethoxycarbonylmethyl, 2-Methoxycarbonylethyl, 2-Ethoxycarbonylethyl, 3-Methoxycarbonylpropyl, 3-Ethoxycarbonylpropyl, 4-Methoxycarbonylbutyl, 4-Ethoxycarbonylbutyl, 5-Methoxycarbonylpentyl, 5-Ethoxycarbonylpentyl, 6-Methoxycarbonylhexyl, 6-Ethoxycarbonylhexyl, 2-Methoxycarbonyloxyethyl, 2-Ethoxycarbonyloxyethyl, 2- oder 3-Methoxycarbonyloxypropyl, 2- oder 3-Ethoxycarbonyloxypropyl, 2-Acetyloxyethyl, 2-Propionyloxyethyl, 2- oder 3-Acetyloxypropyl, 2- oder 3-Propoxyloxypropyl, 2- oder 4-Acetyloxybutyl, 2- oder 4-Propionyloxybutyl, Prop-2-en-1-yl, But-2-en-1-yl, 2-Methylprop-2-en-1-yl, 3-Chlorprop-2-en-1-yl oder 4-Chlorbut-2-en-1-yl.

Bevorzugt sind Azofarbstoffe der Formel I, in der R³ Wasserstoff oder Methyl und R⁴ und R⁵ jeweils Wasserstoff bedeuten.

Bevorzugt sind weiterhin Azofarbstoffe der Formel I, in der D einen Rest der Formel 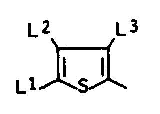 bedeutet, worin L¹, L² und L³ jeweils die obengenannte Bedeutung besitzen.

Besonders bevorzugt sind Azofarbstoffe der Formel I, in der R¹ Wasserstoff, R² C₁-C₁₀-Alkyl das gegebenenfalls durch 1 Sauerstoffatom in Etherfunktion unterbrochen ist und durch Phenyl, Cyano, C₁-C₄-Alkoxycarbonyl oder Hydroxy substituiert sein kann, R³ Wasserstoff oder Methyl und R⁴ und R⁵ jeweils Wasserstoff bedeuten.

Besonders bevorzugt sind weiterhin Azofarbstoffe der Formel I, in der D einen Rest der Formel 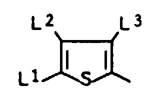 bedeutet, worin
L¹ für Cyano, Formyl oder einen Rest der Formel -CH=C(CN)₂ oder -CH=C(CN)-COOX, worin X die obengenannte Bedeutung besitzt,
L² für Chlor oder C₁-C₄-Alkoxycarbonyl und
L³ für Cyano oder C₁-C₄-Alkoxycarbonyl stehen.

Von besonderem Interesse sind Azofarbstoffe der Formel I, in der D den Rest der Formel 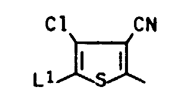 bedeutet, worin
L¹ für Formyl oder einen Rest der Formel -CH=C(CN)₂ oder -CH=C(CN)-COOX, worin X die obengenannte Bedeutung besitzt, stehen.

Die neuen Azofarbstoffe der Formel I können nach an sich bekannter Weise erhalten werden. Beispielsweise diazotiert man ein Amin der Formel II

D-NH₂ (II),

in der D die obengenannte Bedeutung besitzt, auf an sich bekanntem Wege und kuppelt es mit einer Kupplungskomponente der Formel III 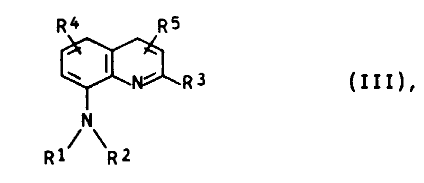 in der R¹, R², R³, R⁴ und R⁵ jeweils die obengenannte Bedeutung besitzen.

Wenn L¹ oder L⁴ den Rest -CH=C(CN)₂ oder -CH=C(CN)-COOX bedeuten, kann man entweder die Diazotierung mit solchen 2-Aminothiophen- oder 2-Aminothiazolderivaten vornehmen, die diese Gruppen bereits im Molekül enthalten, oder man führt die Diazotierung mit den entsprechenden Formylderivaten durch und kondensiert nach der Kupplungsreaktion mit Malondinitril oder Cyanessigsäure-C₁-C₄-alkylester.

Bei den Aminen der Formel II und den Kupplungskomponenten der Formel III handelt es sich in der Regel um an sich bekannte Verbindungen. Diazokomponenten aus der Aminothienothiophen- oder Aminothienothiazolreihe sind z.B. in der US-A-4 843 153 oder GB-A-1 546 803 beschrieben.

Die erfindungsgemäßen Azofarbstoffe der Formel I eignen sich als Dispersionsfarbstoffe vorteilhaft zum Färben oder Bedrucken von textilen Fasern oder Geweben, insbesondere von Polyestern, daneben auch von Fasern oder Geweben aus Celluloseestern oder Polyamiden oder Mischgeweben aus Polyester und Cellulosefasern.

Um einen günstigen Farbaufbau zu erreichen, kann es in manchen Fällen von Vorteil sein, Mischungen der Farbstoffe der Formel I untereinander zum Färben zu verwenden.

Die neuen Azofarbstoffe zeichnen sich durch hohe Farbstärke, gute Echtheiten und brillante Farbtöne aus.

Die erfindungsgemäßen Azofarbstoffe eignen sich weiterhin vorteilhaft für die thermische übertragung von einem Träger auf ein mit Kunststoff beschichtetes Papier mittels einer Energiequelle (siehe z.B. EP-A-416 434).

Die folgenden Beispiele sollen die Erfindung näher erläutern.

### Beispiel 1

a) 4,40 g (0,02 mol) 2-Amino-3-cyano-4-chlor-5-formylthiophen wurden in 20 ml 96 gew.-%iger Schwefelsäure gelöst und 1 Stunde bei 25 bis 30°C gerührt. Bei 0 bis 5°C wurden dann 6,60 g Nitrosylschwefelsäure (11,5 % N₂O₃) zugetropft und 2,5 Stunden bei 0 bis 5°C gerührt.
b) 5,40 g (0,021 mol) 2-Methyl-8-(2-methoxycarbonylethylamino)-chinolin wurden in 500 ml Wasser und 5 ml 96 gew.-%iger Schwefelsäure gelöst, mit 0,50 g Amidosulfonsäure und 300 g Eis vorgelegt und bei maximal 5°C mit der unter a) beschriebenen Diazoniumsalzlösung versetzt. Nach Beendigung der Kupplung wurde der Farbstoff bei 60°C abgesaugt, neutral gewaschen und getrocknet. Man erhielt 8,00 g (90,6 % d.Th.) des Farbstoffs der Formel 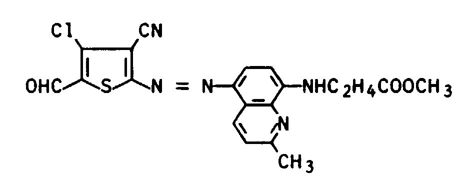 der Polyesterfasern in blauer echter Nuance färbt.

### Beispiel 2

a) 4,60 g (0,025 mol) 2-Amino-3,5-dicyano-4-chlorthiophen wurden in 100 ml Eisessig/Propionsäure (3:1 v/v) und 25 ml 85 gew.-%iger Schwefelsäure bei maximal 5°C mit 6,80 g Nitrosylschwefelsäure (11,5 % N₂O₃) versetzt und 3 Stunden bei 0 bis 5°C gerührt.
b) 7,10 g (0,027 mol) 2-Methyl-8-(2-methoxycarbonylethylamino)chinolin wurden in 500 ml Wasser und 5 ml 96 gew.-%iger Schwefelsäure gelöst, mit 0,50 g Amidosulfonsäure und 300 g Eis vorgelegt und bei maximal 5°C mit der unter a) beschriebenen Diazoniumsalzlösung versetzt. Nach Beendigung der Kupplung wurde der Farbstoff bei 60°C abgesaugt, neutral gewaschen und getrocknet. Man erhielt 8,0 g (90,6 % d.Th.) des Farbstoffs der Formel 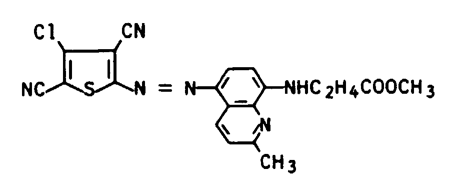 der Polyester in blauer Nuance färbt.

Analog den Beispielen 1 und 2 werden die in den folgenden Tabellen 1 bis 3 aufgeführten Farbstoffe erhalten.

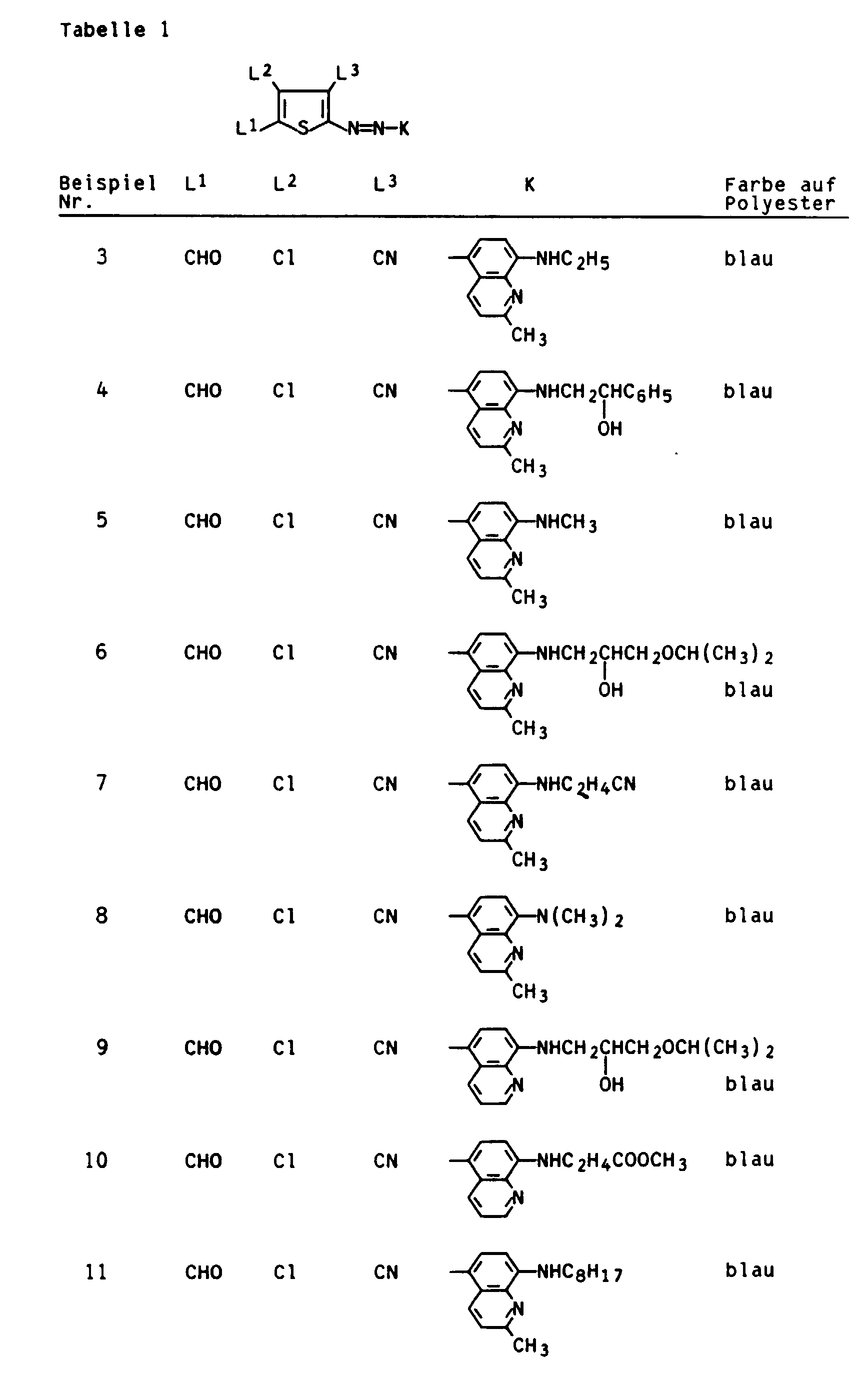

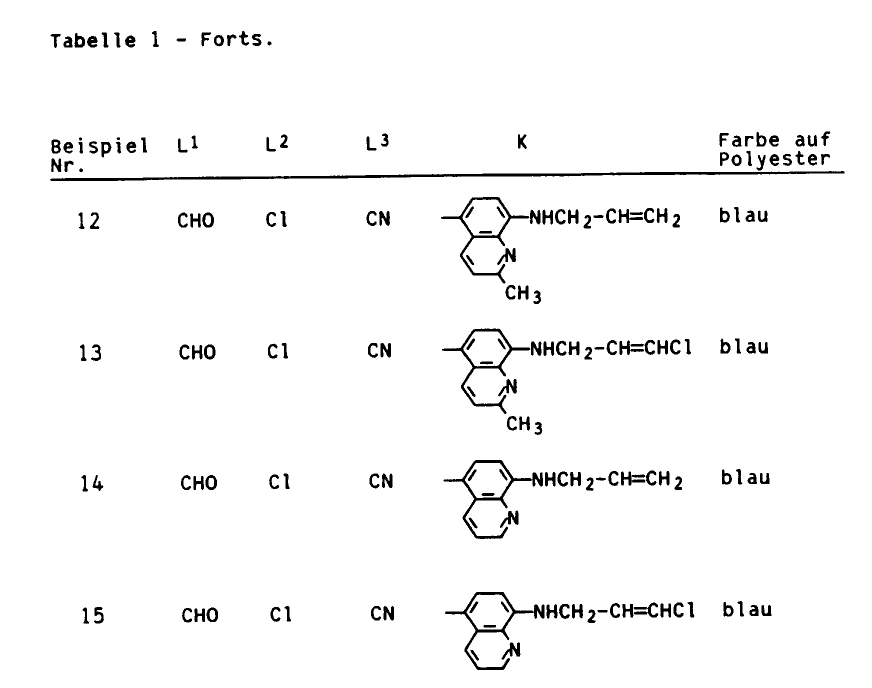

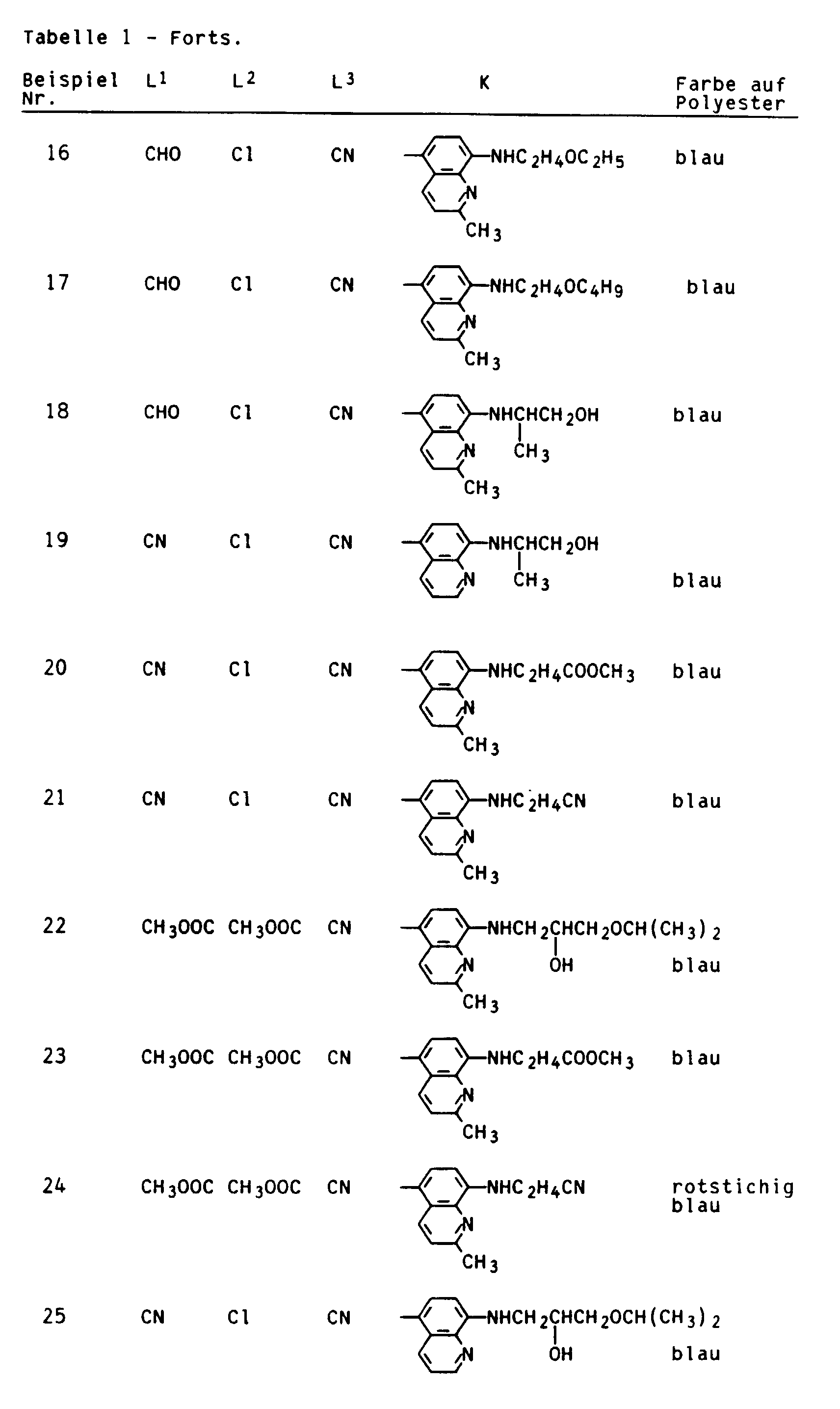

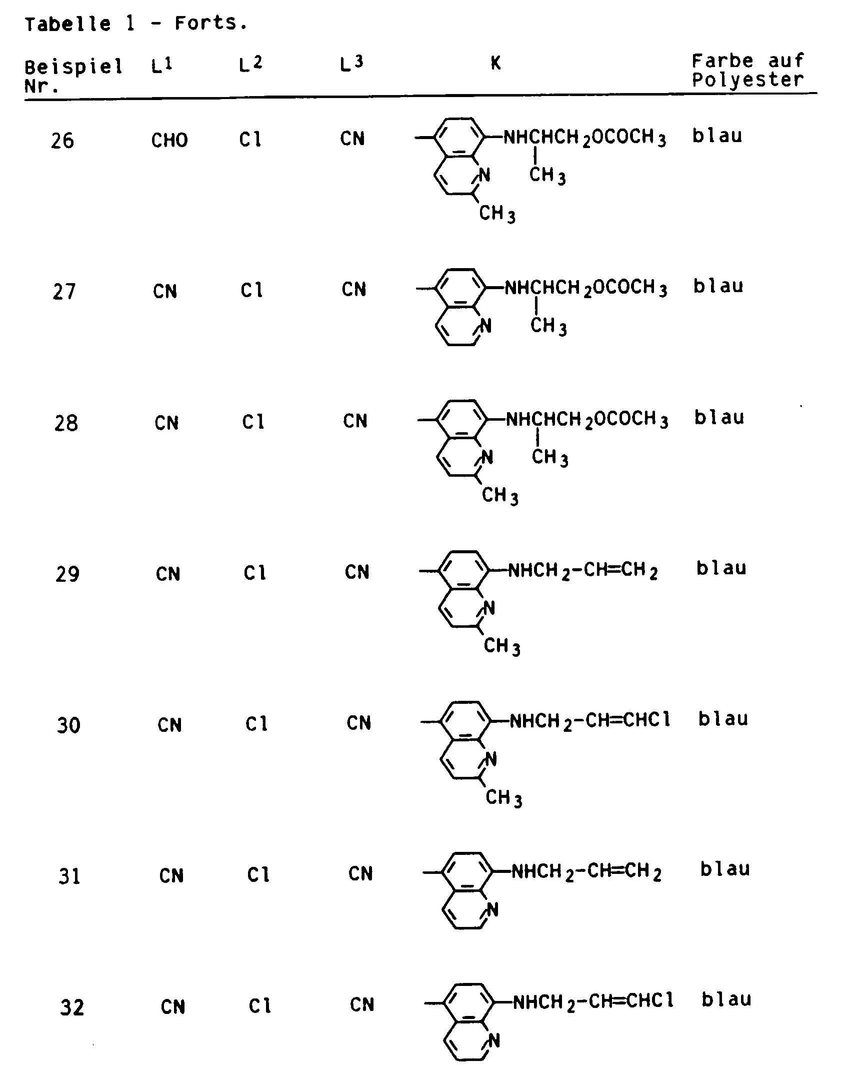

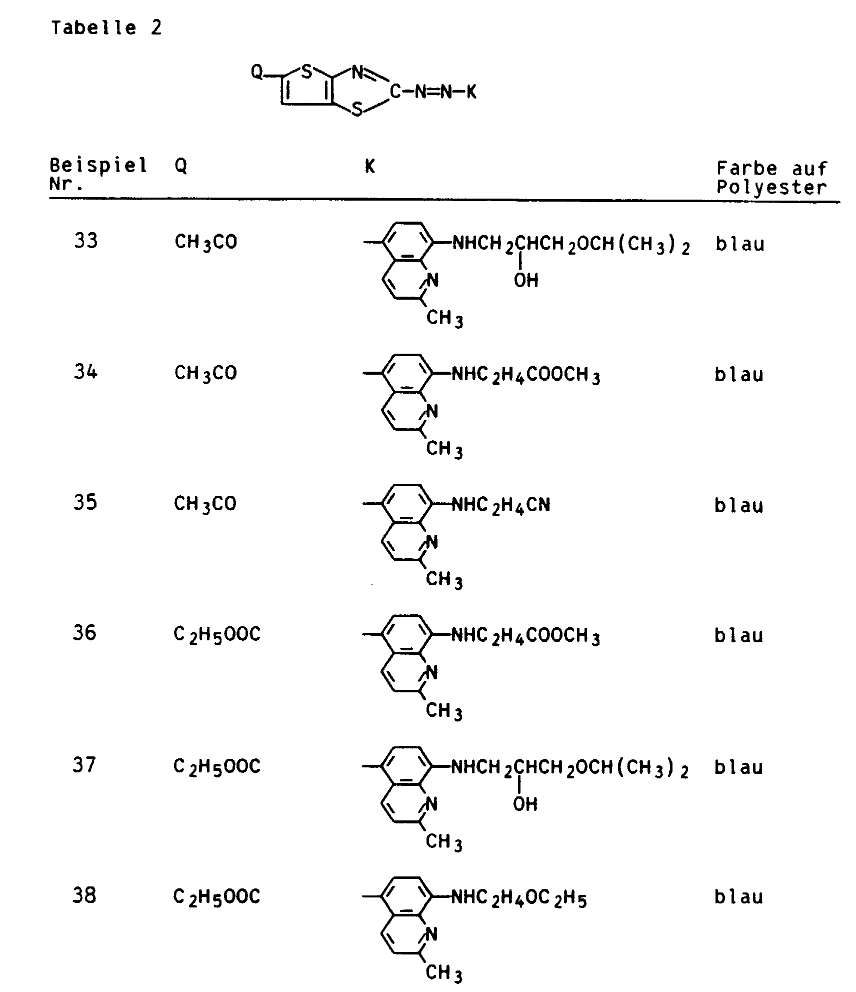

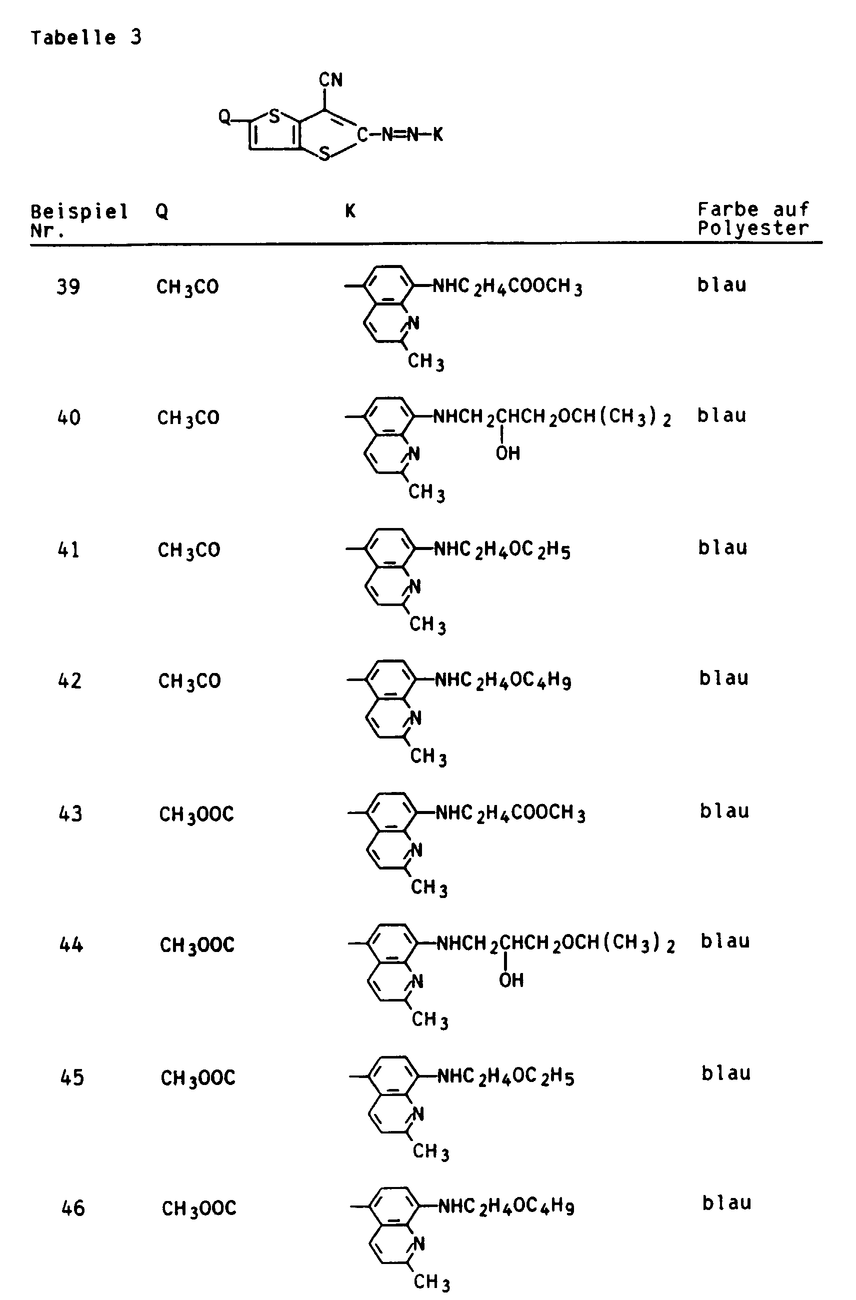

Die Diazokomponenten der in der obigen Tabelle 2 aufgeführen Farbstoffe wurden wie folgt erhalten:

### Beispiel 47

81,2 g 2-Amino-4-chlor-5-formylthiazol wurden in 400 ml N,N-Dimethylformamid gelöst. Hierzu wurden 60 g Kaliumcarbonat gegeben und bei Raumtemperatur 54,6 ml Thioglykolsäureethylester zugetropft. Nach Abklingen der exothermen Reaktion wurde das Reaktionsgemisch 3 Stunden bei 60°C gerührt. Anschließend wurde auf 1,5 l Eiswasser gefällt, der Niederschlag abgesaugt, mit Wasser nachgewaschen und bei 50°C unter vermindertem Druck getrocknet. Man erhielt 79,8 g (70 % d.Th.) der Verbindung der Formel 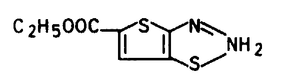 vom Schmelpunkt 98°C.

In analoger Weise kann die entsprechende Methoxycarbonylverbindung (Fp.: 238°C) oder die Acetylverbindung (Fp.: 259-60°C) erhalten werden.

### Beispiel 48

a) 6,40 g (0,025 mol) 3-Benzyl-4-cyano-5-aminoisothiazol wurden bei 35°C in eine Mischung von 13,0 g Eis und 35,0 g 96 gew.-%ige Schwefelsäure gegeben. Nach Zugabe von 8,0 g Nitrosylschwefelsäure (11,5 % N₂O₃) wurde 3 Stunden bei 0 bis 5°C gerührt.
b) 6,0 g (0,028 mol) 2-Methyl-8-(2-cyanoethylamino)chinolin wurden in 500 ml Wasser und 5 ml 96 gew.-%iger Schwefelsäure gelöst, mit 0,50 g Amidosulfonsäure und 300 g Eis vorgelegt und bei maximal 5°C mit der unter a) beschriebenen Diazoniumsalzlösung versetzt. Nach Beendigung der Kupplung wurde der Farbstoff bei 40 bis 60°C abgesaugt, neutral gewaschen und getrocknet. Man erhielt 7,6 g (70 % d.Th.) des Farbstoffs der Formel 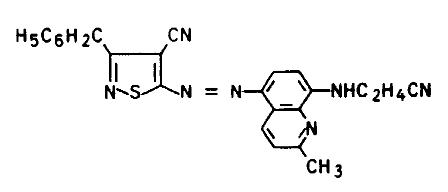 in Form eines schwarzen Pulvers (Fp.: 201-204°C). Der Farbstoff färbt Polyesterfasern in violetter lichtechter Nuance.

In analoger Weise werden die in den folgenden Tabellen 4 und 5 aufgeführten Farbstoffe erhalten.

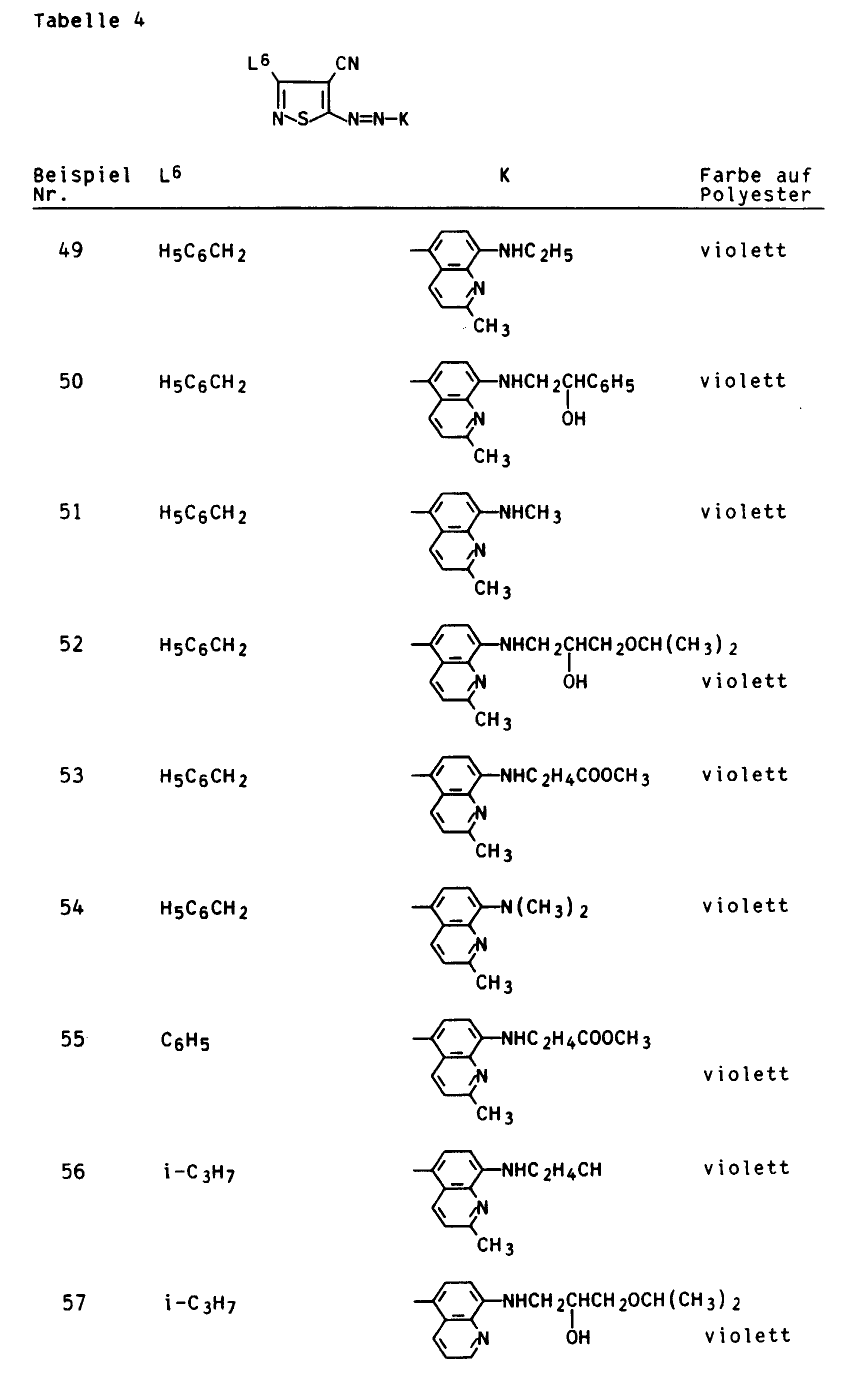

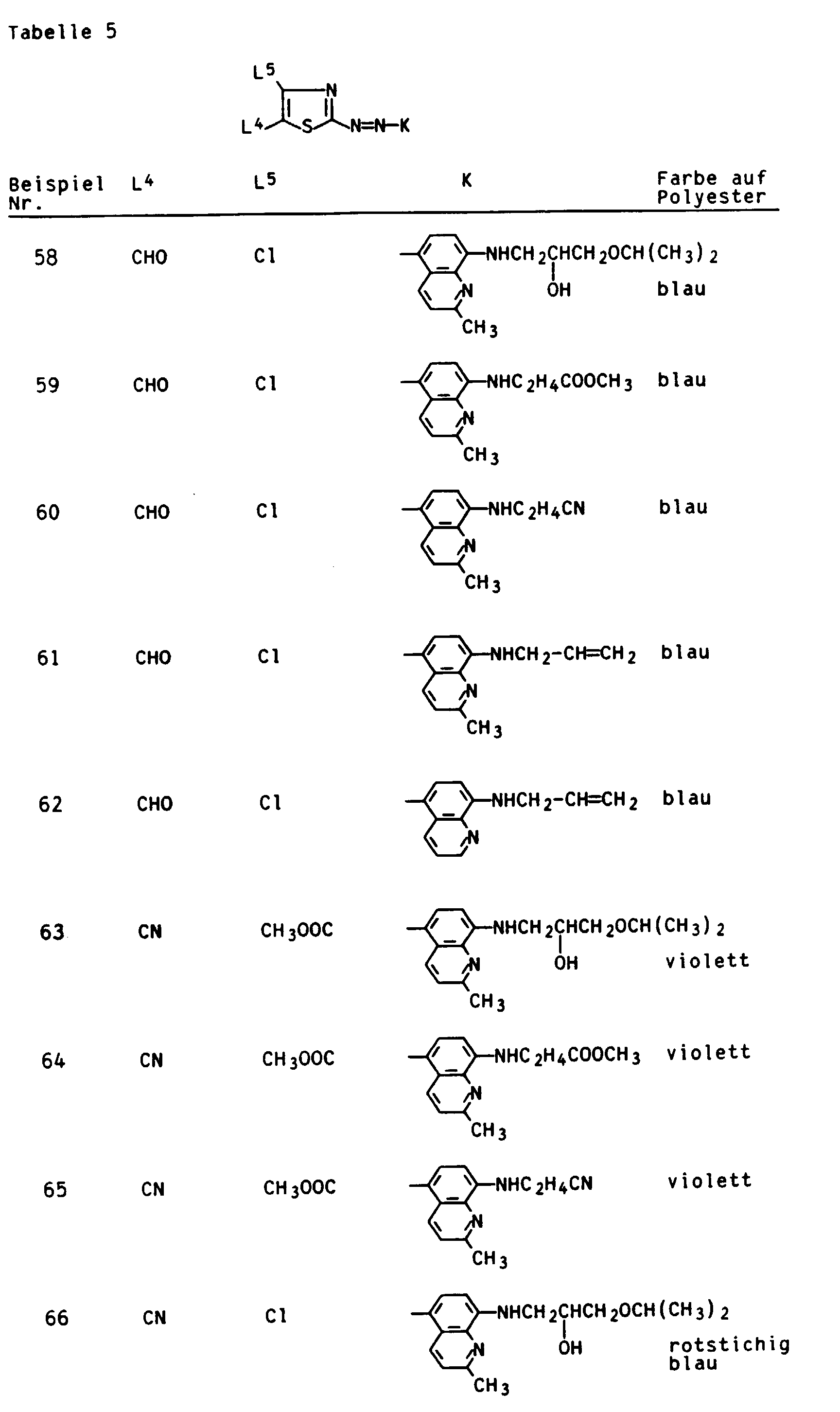

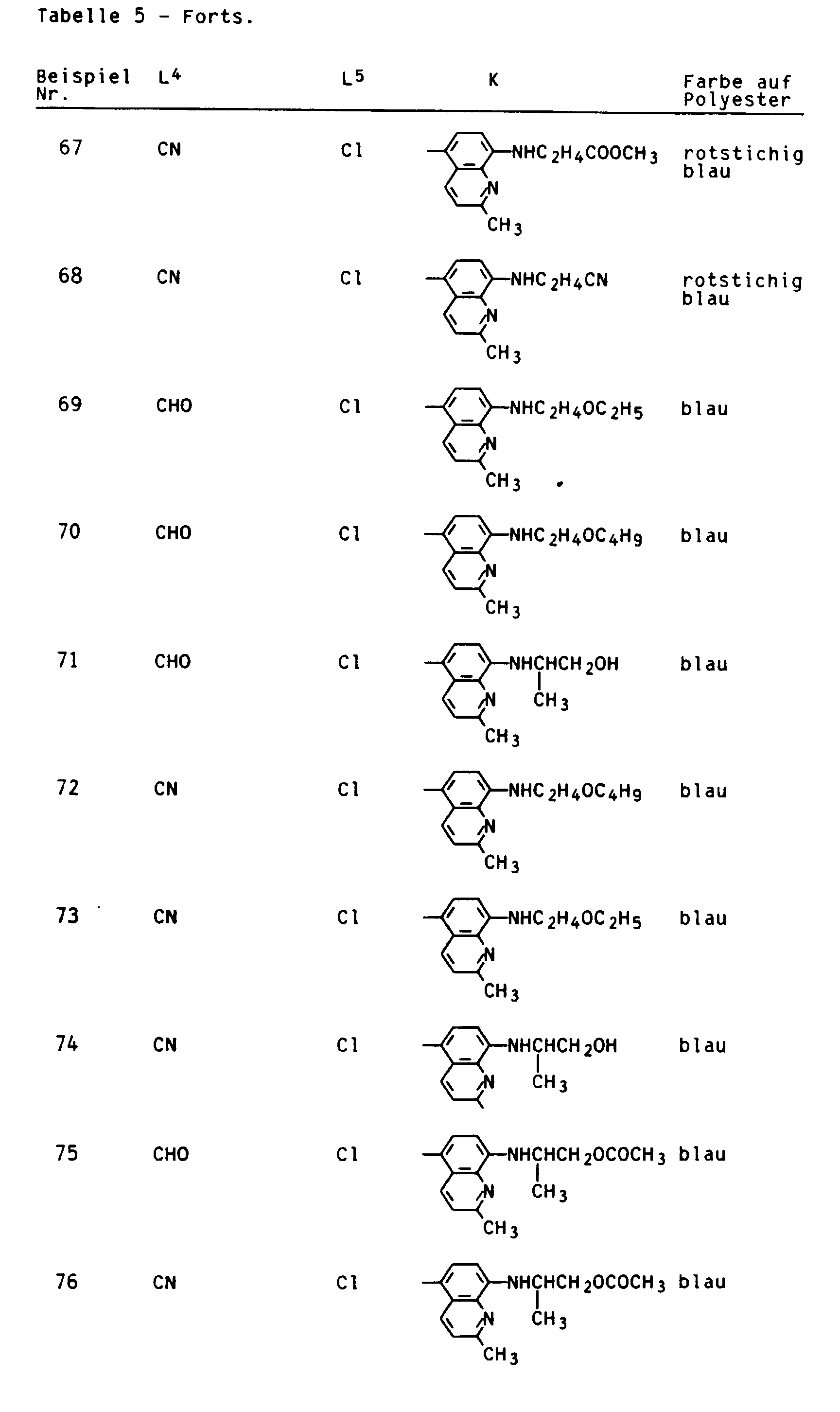

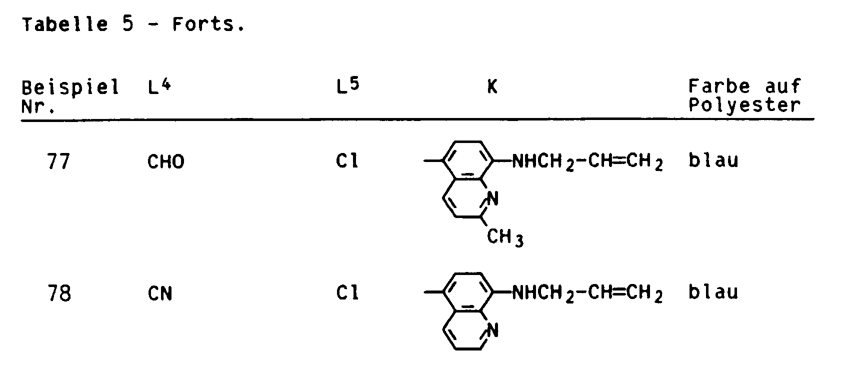

### Beispiel 79

2,36 g (0,005 mol) des Farbstoffs aus Beispiel 6 wurden in 20 ml Eisessig gelöst, mit 0,40 g (0,006 mol) Malonsäuredinitril versetzt und 1 Stunde auf 80°C erhitzt. Anschließend wurde mit 20 ml Wasser versetzt, 15 Minuten gerührt, abgesaugt, mit 50 ml 50 gew.-%iger wäßriger Essigsäure und anschließend mit Wasser gewaschen und bei 50°C unter vermindertem Druck getrocknet. Man erhielt 2,45 g des Farbstoffs der Formel 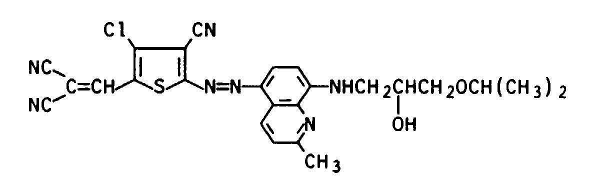 in Form eines grünlichen Pulvers, welches Polyesterfasern in grünstichig blauem Ton färbt.

### Beispiel 80

a) 66 g (0,3 mol) 2-Amino-3-cyano-4-chlor-5-formylthiophen wurden in 500 ml Eisessig gelöst, mit 23,80 g (0,36 mol) Malonsäuredinitril versetzt und 6,5 Stunden auf 118°C erhitzt. Anschließend ließ man abkühlen und saugte bei Raumtemperatur ab. Nach Waschen mit 100 ml Eisessig, Neutralwaschen mit Wasser und Trocknen bei 40°C unter vermindertem Druck, erhielt man 72,1 g der Diazokomponente der Formel 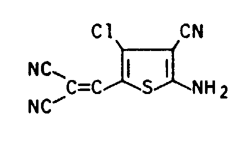
b) 5,90 g (0,025 mol) des unter a) beschriebenen 2-Amino-3-cyano-4-chlor-5-(2,2-dicyanovinyl)thiophen wurden in 100 ml Eisessig/Propionsäure (3:1 v/v) und 20 ml 85 gew.-%iger Schwefelsäure gelöst, bei 0 bis 5°C mit 7,8 g Nitrosylschwefelsäure (11,5 % N₂O₃) versetzt und 2 Stunden bei 0 bis 5°C gerührt.
c) 8,00 g (0,035 mol) 2-Methyl-8-(2-methoxycarbonylethylamino)-chinolin wurden in 150 ml Wasser und 2 ml 96 gew.-%iger Schwefelsäure gelöst und mit 0,5 g Amidosulfonsäure sowie 300 g Eis versetzt. Man tropfte die unter b) beschriebene Diazoniumsalzlösung innerhalb von 10 Minuten bei 0 bis 5°C zu. Nach beendigter Kupplung wurde bei 60°C abgesaugt, neutral gewaschen und bei 50°C unter vermindertem Druck getrocknet. Man erhielt 7,70 g des Farbstoffs der Formel 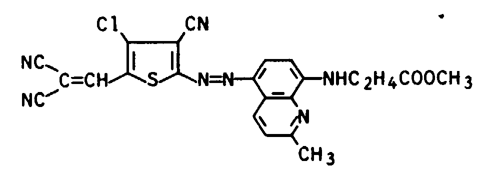 der Polyesterfasern in grünstichig blauer Nuance färbt.

Analog Beispiel 79 und 80 werden die in der folgenden Tabelle 6 aufgeführten Farbstoffe erhalten.

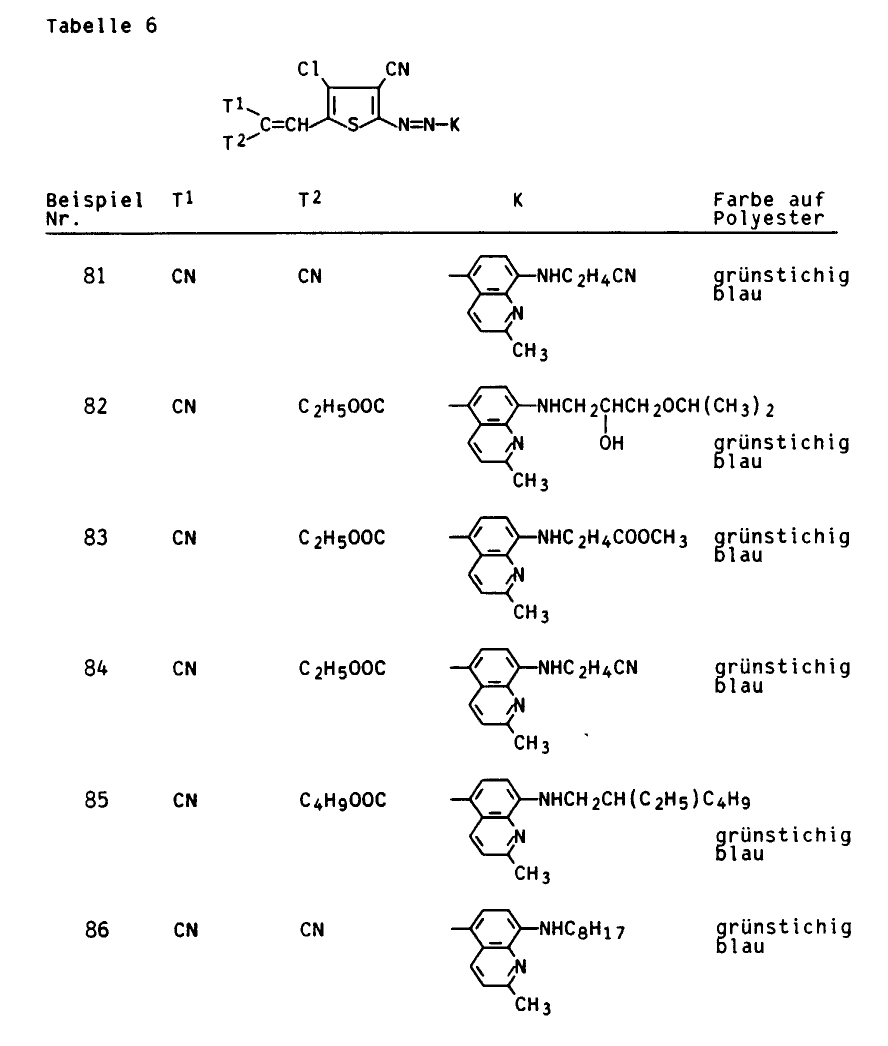

### Übertragung von Farbstoffen (Anwendung)

### Allgemeine Vorschrift:

a) 10 g Farbstoff werden bei 20°C in 100 g einer 10 gew.-%igen Lösung eines Bindemittels (Vylon® 290 der Firma Toyobo) in einem Methylethylketon/Toluol/Cyclohexanon-Gemisch (4,5:2:2 v/v/v) eingerührt.
   Die Drucktinte wird mit einer 6 µm Rakel auf eine Polyesterfolie von 6 µm Dicke, auf deren Rückseite eine geeignete Gleitschicht aufgebracht ist, aufgerakelt und mit einem Föhn 1 Minute trockengeblasen. Bevor das Farbband verdruckt werden kann, muß es mindestens 24 Stunden an der Luft nachtrocknen, da Restlösungsmittel den Druckvorgang beeinträchtigen können.
b) Die Farbbänder werden auf einer rechnergesteuerten Versuchsanordnung, die mit einem handelsüblichen Thermokopf ausgestattet ist, auf Hitachi VY-S Videoprintpapier verdruckt.

Durch Veränderung der Spannung wird die Energieabgabe des Thermokopfs gesteuert, wobei die eingestellte Impulsdauer 7 ms beträgt und immer nur ein Impuls abgegeben wird. Die abgegebene Energie liegt zwischen 0,71 und 1,06 mJ/Dot.

Da die Höhe der Anfärbung direkt proportional der zugeführten Energie ist, kann ein Farbkeil erzeugt und spektroskopisch ausgewertet werden.

Aus der graphischen Auftragung der Farbtiefe gegen die zugeführte Energie wird der Q∗-Wert (= Energie in mJ/Dot für den Extinktionswert 1) und die Steigung m in 1/mJ ermittelt.

Die erhaltenen Ergebnisse sind in der folgenden Tabelle 7 aufgeführt.

**Tabelle 7**

| Beispiel Nr. | Farbstoff Nr. | λₘₐₓ [nm] (gemessen in CH₂Cl₂) | Q* [mJ/Dot] | m [1/mJ] |
|---|---|---|---|---|
| 87 | 3 | 623 | 0,99 | 2,10 |
| 88 | 11 | 622 | 0,94 | 2,34 |
| 89 | 6 | 616 | 1,31 | 1,32 |
| 90 | 1 | 609 | 1,36 | 1,20 |
| 91 | 7 | 595 | 1,78 | 0,83 |
| 92 | 16 | 616 | 1,54 | 1,04 |
| 93 | 17 | 616 | 1,22 | 1,41 |
| 94 | 85 | 672 | 1,08 | 2,06 |
| 95 | 86 | 692 | 1,17 | 1,73 |

## Patentansprüche

1. Azofarbstoffe der Formel I 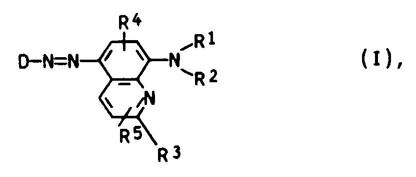 in der
R¹ und R² gleich oder verschieden sind und unabhängig voneinander jeweils C₁-C₁₀-Alkyl, das gegebenenfalls durch 1 oder 2 Sauerstoffatome in Etherfunktion unterbrochen ist und durch Phenyl, Cyano, C₁-C₄-Alkoxycarbonyl, C₁-C₄-Alkoxycarbonyloxy, Hydroxy oder C₁-C₄-Alkanoyloxy substituiert sein kann, oder gegebenenfalls durch Chlor substituiertes C₃-C₄-Alkenyl oder R¹ zusätzlich Wasserstoff,
R³ Wasserstoff oder C₁-C₆-Alkyl,
R⁴ und R⁵ gleich oder verschieden sind und unabhängig voneinander jeweils Wasserstoff, C₁-C₆-Alkyl, Halogen, C₁-C₆-Alkoxy, Amino oder C₁-C₄-Mono- oder Dialkylamino und
D einen Rest der Formel 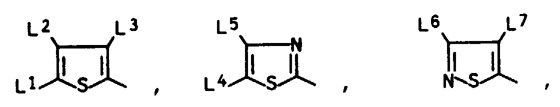 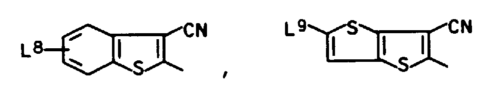 oder 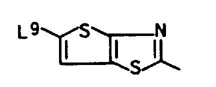 bedeuten, worin
L¹ für Cyano, C₁-C₆-Alkanoyl, Benzoyl, C₁-C₄-Alkoxycarbonyl, C₁-C₆-Alkylsulfonyl, gegebenenfalls substituiertes Phenylsulfonyl oder einen Rest der Formel -CH=C(CN)₂ oder -CH=C(CN)-COOX, worin X die Bedeutung von C₁-C₄-Alkyl besitzt,
L² für Halogen, gegebenenfalls durch Phenyl oder C₁-C₄-Alkoxy substituiertes C₁-C₆-Alkoxy, gegebenenfalls substituiertes Phenoxy, gegebenenfalls durch Phenyl substituiertes C₁-C₆-Alkylthio, gegebenenfalls substituiertes Phenylthio, C₁-C₆-Alkylsulfonyl, gegebenenfalls substituertes Phenylsulfonyl oder C₁-C₄-Alkoxycarbonyl,
L³ für Cyano oder C₁-C₄-Alkoxycarbonyl,
L⁴ für Cyano, C₁-C₆-Alkanoyl, Benzoyl, C₁-C₆-Alkylsulfonyl, gegebenenfalls substituiertes Phenylsulfonyl oder einen Rest der Formel -CH=C(CN)₂ oder -CH=C(CN)-COOX, worin X die Bedeutung von C₁-C₄-Alkyl besitzt,
L⁵ für Wasserstoff, C₁-C₆-Alkyl, Halogen, gegebenenfalls durch Phenyl oder C₁-C₄-Alkoxy, substituiertes C₁-C₆-Alkoxy, gegebenenfalls durch Phenyl substituiertes C₁-C₆-Alkylthio, gegebenenfalls substituiertes Phenylthio, C₁-C₆-Alkylsulfonyl, gegebenenfalls substituiertes Phenylsulfonyl oder C₁-C₄-Alkoxycarbonyl,
L⁶ für Cyano, gegebenenfalls durch Phenyl substituiertes C₁-C₆-Alkyl, C₁-C₆-Alkylthio, gegebenenfalls substituiertes Phenyl, Thienyl, C₁-C₄-Alkylthienyl, Pyridyl oder C₁-C₄-Alkylpyridyl,
L⁷ für Cyano, C₁-C₄-Alkoxycarbonyl, Halogen oder Thiocyanato,
L⁸ für Wasserstoff, Cyano oder Halogen und
L⁹ für C₁-C₆-Alkanoyl oder C₁-C₄-Alkoxycarbonyl
stehen.

2. Azofarbstoffe nach Anspruch 1, dadurch gekennzeichnet, daß
R³ Wasserstoff oder Methyl und
R⁴ und R⁵ jeweils Wasserstoff bedeuten.

3. Azofarbstoffe nach Anspruch 1, dadurch gekennzeichnet, daß D einen Rest der Formel 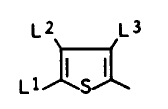 bedeutet, worin L¹, L² und L³ jeweils die in Anspruch 1 genannte Bedeutung besitzen.

4. Verwendung der Azofarbstoffe gemäß Anspruch 1 zum Färben oder Bedrucken von textilen Fasern oder Geweben.

5. Verwendung der Azofarbstoffe gemäß Anspruch 1 für die thermische Übertragung von einem Träger auf ein mit Kunststoff beschichtetes Papier mittels einer Energiequelle.

## Claims

1. An azo dye of the formula I 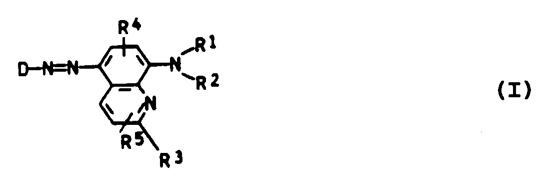 where
R¹ and R² are identical or different and each is independently of the other C₁-C₁₀-alkyl, which may be interrupted by 1 or 2 oxygen atoms in ether function and may be substituted by phenyl, cyano, C₁-C₄-alkoxycarbonyl, C₁-C₄-alkoxycarbonyloxy, hydroxyl or C₁-C₄-alkanoykoxy, or unsubstituted or chlorine-substituted C₃-C₄-alkenyl, or R¹ may also be hydrogen,
R³ is hydrogen or C₁-C₆-alkyl,
R⁴ and R⁵ are identical or different and each is independently of the other hydrogen, C₁-C₆-alkyl, halogen, C₁-C₆-alkoxy, amino or mono- or di(C₁-C₄-alkyl)amino, and
D is a radical of the formula 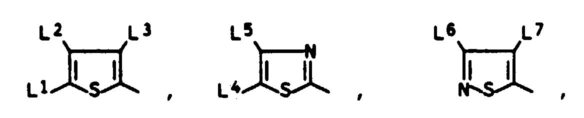 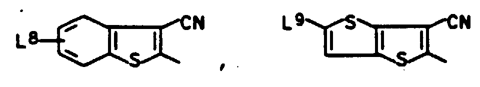 or 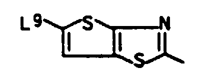 where
L¹ is cyano, C₁-C₆-alkanoyl, benzoyl, C₁-C₄-alkoxycarbonyl, C₁-C₆-alkylsulfonyl, substituted or unsubstituted phenylsulfonyl or a radical of the formula -CH=C(CN)₂ or -CH=C(CN)-COOX, where X is C₁-C₄-alkyl,
L² is halogen, unsubstituted or phenyl- or C₁-C₄-alkoxysubstituted C₁-C₆-alkoxy, substituted or unsubstituted phenoxy, unsubstituted or phenyl-substituted C₁-C₆-alkylthio, substituted or unsubstituted phenylthio, C₁-C₆-alkylsulfonyl, substituted or unsubstituted phenylsulfonyl or C₁-C₄-alkoxycarbonyl,
L³ is cyano or C₁-C₄-alkoxycarbonyl,
L⁴ is cyano, C₁-C₆-alkanoyl, benzoyl, C₁-C₆-alkylsulfonyl, substituted or unsubstituted phenylsulfonyl or a radical of the formula -CH=C(CN)₂ or -CH=C(CN)-COOX, where X is C₁-C₄-alkyl,
L⁵ is hydrogen, C₁-C₆-alkyl, halogen, unsubstituted or phenyl- or C₁-C₄-alkoxy-substituted C₁-C₆-alkoxy, unsubstituted or phenyl-substituted C₁-C₆-alkylthio, substituted or unsubstituted phenylthio, C₁-C₆-alkylsulfonyl, substituted or unsubstituted phenylsulfonyl or C₁-C₄-alkoxycarbonyl,
L⁶ is cyano, unsubstituted or phenyl-substituted C₁-C₆-alkyl, C₁-C₆-alkylthio, substituted or unsubstituted phenyl, thienyl, C₁-C₄-alkylthienyl, pyridyl or C₁-C₄-alkylpyridyl,
L⁷ is cyano, C₁-C₄-alkoxycarbonyl, halogen or thiocyanato,
L⁸ is hydrogen, cyano or halogen and
L⁹ is C₁-C₆-alkanoyl or C₁-C₄-alkoxycarbonyl.

2. An azo dye as claimed in claim 1, wherein R³ is hydrogen or methyl and R⁴ and R⁵ are each hydrogen.

3. An azo dye as claimed in claim 1, wherein D is a radical of the formula 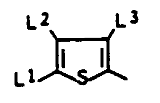 where L¹, L² and L³ are each as defined in claim 1.

4. The use of an azo dye as claimed in claim 1 for dyeing or printing textile fibers or fabrics.

5. The use of an azo dye as claimed in claim 1 for thermal transfer from a transfer to a plastic-coated paper by means of an energy source.

## Revendications

1. Colorants azoïques de formule I 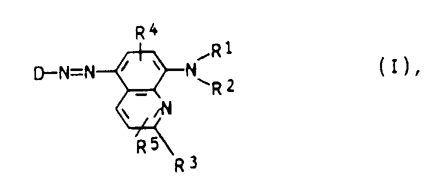 dans laquelle
R¹ et R² sont identiques ou différents et représentent chacun, indépendamment l'un de l'autre, un reste alkyle en C₁-C₁₀ qui est éventuellement interrompu par 1 ou 2 atomes d'oxygène en fonction éther et peut être substitué par un groupement phényle, cyano, (alcoxy en C₁-C₄)carbonyle, (alcoxy en C₁-C₄)-carbonyloxy, hydroxy ou alcanoyloxy en C₁-C₄, ou un reste alcényle en C₃-C₄ éventuellement substitué par un atome de chlore, R¹ pouvant être en plus un atome d'hydrogène,
R³ représente un atome d'hydrogène ou un reste alkyle en C₁-C₆,
R⁴ et R⁵ sont identiques ou différents et représentent chacun, indépendamment l'un de l'autre, un atome d'hydrogène, un reste alkyle en C₁-C₆, un atome d'halogène ou un reste alcoxy en C₁-C₆, amino ou mono- ou dialkylamino en C₁-C₄, et
D représente un reste de formule 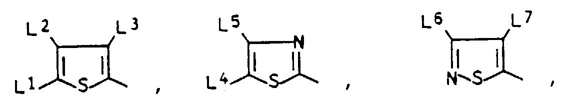 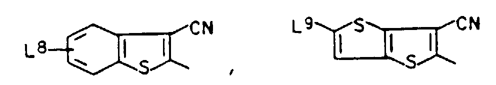 ou 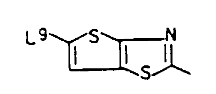
dans laquelle
L¹ est mis pour un reste cyano, alcanoyle en C₁-C₆, benzoyle, (alcoxy en C₁-C₄)carbonyle, alkylsulfonyle en C₁-C₆, phénylsulfonyle éventuellement substitué ou un reste de formule -CH=C(CN)₂ ou -CH=C(CN)-COOX, X représentant un reste alkyle en C₁-C₄,
L² est mis pour un atome d'halogène, un reste alcoxy en C₁-C₆ éventuellement substitué par un groupement phényle ou alcoxy en C₁-C₄, un reste phénoxy éventuellement substitué, alkylthio en C₁-C₆ éventuellement substitué par un groupement phényle, un reste phénylthio éventuellement substitué, alkylsulfonyle en C₁-C₆, phénylsulfonyle éventuellement substitué ou (alcoxy en C₁-C₄)carbonyle,
L³ est mis pour un reste cyano ou (alcoxy en C₁-C₄)carbonyle,
L⁴ est mis pour un reste cyano, alcanoyle en C₁-C₆, benzoyle, alkylsulfonyle en C₁-C₆, phénylsulfonyle éventuellement substitué ou un reste de formule -CH=C(CN)₂ ou -CH=C(CN)-COOX, X représentant un reste alkyle en C₁-C₄,
L⁵ est mis pour un atome d'hydrogène, un reste alkyle en C₁-C₆, un atome d'halogène, un reste alcoxy en C₁-C₆ éventuellement substitué par un groupement phényle ou alcoxy en C₁-C₄, un reste alkylthio en C₁-C₆ éventuellement substitué par un groupement phényle, un reste phénylthio éventuellement substitué, un reste alkylsulfonyle en C₁-C₆, phénylsulfonyle éventuellement substitué ou (alcoxy en C₁-C₄)carbonyle,
L⁶ est mis pour un reste cyano, alkyle en C₁-C₆ éventuellement substitué par un groupement phényle, un reste alkylthio en C₁-C₆, phényle éventuellement substitué, thiényle, alkylthiényle en C₁-C₄, pyridyle ou alkylpyridyle en C₁-C₄,
L⁷ est mis pour un reste cyano, (alcoxy en C₁-C₄)-carbonyle, un atome d'halogène ou un reste thiocyanato,
L⁸ est mis pour un atome d'hydrogène, un reste cyano ou un atome d'halogène et
L⁹ est mis pour un reste alcanoyle en C₁-C₆ ou (alcoxy en C₁-C₄)carbonyle.

2. Colorants azoïques selon la revendication 1, caractérisés en ce que
R³ représente un atome d'hydrogène ou un reste méthyle et
R⁴ et R⁵ représentent chacun un atome d'hydrogène.

3. Colorants azoïques selon la revendication 1, caractérisés en ce que D représente un reste de formule 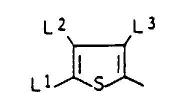 dans laquelle L¹, L² et L³ ont chacun la signification donnée dans la revendication 1.

4. Utilisation des colorants azoïques selon la revendication 1 pour la teinture ou l'impression de fibres textiles ou de tissus.

5. Utilisation des colorants azoïques selon la revendication 1 pour le transfert thermique entre un support et un papier revêtu de matière plastique au moyen d'une source d'énergie.
